# EUROPEAN PATENT SPECIFICATION

(11) **EP 4 328 211 B1**
(45) Date of publication and mention of the grant of the patent: **12.11.2025**
(21) Application number: 22791167.4
(22) Date of filing: 23.03.2022
(51) Int. Cl.: C04B 41/89, C03C 8/00, C04B 41/86

(54) **METHOD FOR PRODUCING DECORATED CERAMIC TILES WHICH PROTECT THE COLOUR EFFECTS DERIVED FROM CERAMIC PIGMENTS AND RESULTING CERAMIC TILES ACCORDING TO THE METHOD**
VERFAHREN ZUR HERSTELLUNG DEKORIERTER KERAMIKFLIESEN, DIE DIE FARBEFFEKTE VON KERAMIKPIGMENTEN SCHÜTZEN UND SO HERGESTELLTE KERAMIKFLIESEN
PROCÉDÉ POUR PRODUIRE DES CARREAUX EN CÉRAMIQUE DÉCORÉS AVEC PROTECTION DES EFFETS CHROMATIQUES DÉRIVÉS DES PIGMENTS CÉRAMIQUES ET CARREAUX EN CÉRAMIQUE OBTENUS SELON LE PROCÉDÉ

(30) Priority: 19.04.2021 ES 202130343
(43) Date of publication of application: 28.02.2024
(73) Proprietor: Torrecid, S.A., 12110 Alcora (Castellón) (ES)
(72) Inventor: RUIZ VEGA, Óscar, 12110 Alcora (Castellón) (ES)
(74) Representative: Carlos Hernando, Borja
(86) International application number: PCT/ES2022/070166
(87) International publication number: WO 2022/223856

(56) References cited:
- EP-A1- 0 446 689
- WO-A1-01/51573
- CN-A- 101 092 308
- CN-A- 110 054 510
- CN-B- 104 829 269
- US-A1- 2013 020 335
- MOLINARI C.; CONTE S.; ZANELLI C.; ARDIT M.; CRUCIANI G.; DONDI M.: "Ceramic pigments and dyes beyond the inkjet revolution: From technological requirements to constraints in colorant design", CERAMICS INTERNATIONAL, ELSEVIER, AMSTERDAM., NL, vol. 46, no. 14, 18 June 2020 (2020-06-18), NL , pages 21839 - 21872, XP086240397, ISSN: 0272-8842, DOI: 10.1016/j.ceramint.2020.05.302

## Description

The present invention relates to a method for producing a glazed and decorated ceramic tile which protects the colour effects derived from ceramic pigments, preferably the pigments that are responsible for the red and/or lemon yellow colours, once it has been subjected to a firing cycle at a maximum temperature comprised between 950 °C and 1250 °C.

### STATE OF THE ART

The incorporation of digital inkjet technology as a method for decorating ceramic tiles has allowed an evolution in the type of product that is marketed, as well as a whole series of advantages in management, process and product, that have contributed to maintaining the competitiveness of the ceramic sector in general. These digital decoration systems are based on high-resolution DOD technology (greater than 200 dpi), in which heads are used to generate drops of tens of picolitres.

Nowadays, the idea is to utilize the advantages offered by digital technology not only for the step of decorating, but also for glazing ceramic tiles. In this sense, and using the same high-resolution DOD technology, patent EP2947057B1 protects a digital glaze for high weight, without the use of anti-settling agents, in relation to digital glazes suitable for application using digital inkjet printing techniques that can be used to apply high weights, maintaining the same aesthetic and technical characteristics obtained with traditional glazes and non-digital application techniques. No anti-settling agents are used in the composition so as to prevent the digital glaze of the invention from being thixotropic and, consequently, creating problems in the inkjet printing process. The composition comprises: at least one medium that is liquid at ambient temperature, formed by a mixture of water and polar solvents and/or solvents of medium to low polarity, having a percentage by weight of between 20% and 70% of the total weight of the digital glaze; and at least one mixture of ceramic raw materials and/or frits as a glaze-forming material, having a percentage by weight of between 30% and 80% of the total weight of the digital glaze.

In turn, patent ES2674978B1 protects a ceramic glaze with improved aesthetic and technical possibilities for its application by means of digital inkjet technology on ceramic substrates, and comprising a high content of frits and/or ceramic raw materials with a high particle size. Furthermore, said glaze comprises water, at least one solvent from the glycol family, carboxymethylcellulose, sodium chloride and/or at least one acrylic compound and/or at least one polyurethane compound.

The common characteristic of all these existing patents in the state of the art is that they are characterised by being glaze compositions that do not allow the development of colour finishes without altering the colour effects derived from ceramic pigments. The reason is that the ceramic glazes, both digital and conventional, attack the ceramic pigments that provide colour during the firing cycle, destroying, partially or completely, the chemical structure thereof, resulting in colour loss. Overcoming this limitation would represent an improvement in the characteristics of ceramic tiles and would allow them to be considered as viable alternatives to other materials such as, for example, wood.

The present invention solves these limitations by means of a method of glazing, both digital (by means of inkjet equipment), and conventional (by means of other techniques such as airbrushing, roller, veil glazing, serigraphy or bell), that allows ceramic tiles to be obtained which, once decorated and fired, develop colour finishes without the loss of colour, preferably the tiles that include the colors red and lemon yellow. CN 110 054 510 discloses a method for producing a glazed and decorated ceramic tile.

### DESCRIPTION OF THE INVENTION

Throughout the description and the claims, the word "comprises" and the variants thereof are not intended to exclude other technical features, additives, components or steps. Furthermore, the word "comprises" includes the case of "consists of". For those skilled in the art, other objects, advantages and features of the invention may be partially deduced from both the description and the embodiment of the invention.

The present invention has as its first object a method for producing a glazed and decorated ceramic tile which protects the colour effects derived from ceramic pigments. To that end, the method according to the present invention comprises:
a. Supplying a ceramic tile.
b. Glazing the ceramic tile with a first ceramic glaze by means of a glazing station.
c. Depositing on the first ceramic glaze a second ceramic glaze by means of a glazing station, where said second ceramic glaze does not contain alkaline-earth elements or Zn.
d. Printing a decoration with at least one ink containing at least one ceramic pigment by means of an inkjet printing station.
e. Introducing the ceramic tile in a firing kiln and firing at a maximum temperature comprised between 950 °C and 1250 °C, resulting in a decorated and fired ceramic tile.

The term "glazing", as it is used herein, refers to a method of depositing a ceramic glaze composition comprising solvents, frits, raw materials and additives (dispersants, humectants, anti-foaming agents, etc.). The selection of said components will be determined by different technical aspects such as the final effect to be achieved after firing (transparent gloss, opaque gloss, matte, transparent matte, satin matte, etc.), the type of product for which it is intended (porcelain, porous product, etc.), the maximum firing temperature, the technology used for glazing (inkjet, airbrushing, roller, veil glazing, serigraphy or bell), among others.

The term "does not contain alkaline-earth elements or Zn", as it is used herein, refers to the absence of Mg, Ca, Sr, Ba and Zn cations, either in the composition of a frit or in the composition of any inorganic compound. Examples of frits and inorganic compounds based on Mg, Ca, Sr, Ba and Zn cations, by way of example but not limitation, are Mg frits, Ca frits, Sr frits, Ba frits, Zn frits, CaCO₃, BaCO₃, SrCO₃, ZnO, anorthite and dolomite. In turn, examples of frits and inorganic compounds without Mg, Ca, Sr, Ba and Zn, by way of example but not limitation, are Na frits, B frits, Na and B frits, ZrSiO₄ frits, sodium feldspar, potassium feldspar, nepheline, Al₂O₃ and quartz.

In turn, the term "ceramic pigment" as it is used herein refers to any synthetic or natural inorganic compound that is characterised by remaining unalterable and providing a colouring to the ceramic support once deposited on it and once the corresponding heat treatment has been carried out. Examples of ceramic pigments, by way of example but not limitation, are various crystalline structures such as zirconium silicate, olivine, sphene spinels, perovskites, hematites, etc., as such or doped with cations such as praseodymium, vanadium, cobalt, iron, chromium, cerium, etc., iron oxide, titanium oxide, chromium oxide and cobalt oxide.

The term "red colour" as it is used herein, refers to any colour effect in the fired ceramic tile characterised by presenting a value of the chromatic coordinate a* equal to or greater than zero, regardless of the value of the chromatic coordinate b*, and of the fact that it has been obtained from a ceramic pigment.

In this sense, the preferred use of any red ceramic pigment is possible, preferably the red pigment of red iron oxides, because it is the one that offers, after firing, the reddest tone without presenting toxicity problems, as occurs in ceramic pigments containing Cd and Se.

The term "lemon yellow colour", as it is used herein, refers to any colour effect in the fired ceramic tile characterised by presenting a value of the chromatic coordinate b* equal to or greater than forty, regardless of the value of the chromatic coordinate a*, and of the fact that it has been obtained from a ceramic pigment.

Likewise, the present invention also contemplates the preferred use of inks that use any lemon yellow ceramic pigment, preferably yellow ceramic pigments comprising in their composition titanium, chromium, nickel, antimony or a mixture thereof. Examples of ceramic pigments that provide a lemon yellow colour, by way of example but not limitation, are the ceramic pigment based on titanium, chromium and antimony and the ceramic pigment based on titanium, nickel and antimony.

This invention also contemplates the option of applying a third ceramic glaze after printing with red and/or lemon yellow ink in order to provide additional protection for the decoration. In that sense, a preferred embodiment consists of a method for producing a glazed and decorated ceramic tile with red and/or lemon yellow colour effects where, after the step of printing the at least red or lemon yellow ink by means of the inkjet printing station, and before introducing it in a firing kiln, a glazing is performed with a third ceramic glaze, by means of a glazing station, where said third ceramic glaze does not contain alkaline-earth elements or Zn.

According to the present invention, ceramic glazes are deposited with a weight comprised between 30 g/m² and 1000 g/m² by means of glazing techniques such as inkjet, airbrushing, roller, veil glazing, serigraphy, bell or combinations thereof. In the event that the glazing technology used is inkjet, ceramic glazes called digital ceramic glazes will be used. The name "digital ceramic glaze" refers to a ceramic glaze specifically formulated to be able to be deposited by means of inkjet technology. In this sense, a preferred embodiment of the present invention contemplates a method for producing a digitally glazed and decorated ceramic tile which protects the colour effects derived from ceramic pigments, comprising:
a. Supplying a ceramic tile.
b. Glazing the ceramic tile with a first digital ceramic glaze by means of an inkjet technology glazing station where the digital ceramic glaze has a particle size (D90) not greater than 1 micrometer and is deposited on the ceramic tile with a weight comprised between 30 g/m² and 1000 g/m².
c. Depositing on the first digital ceramic glaze a second digital ceramic glaze by means of an inkjet technology glazing station, where the second digital ceramic glaze does not contain alkaline-earth elements or Zn, has a particle size (D90) not greater than 1 micrometer and is deposited with a weight comprised between 30 g/m² and 1000 g/m².
d. Printing a decoration with at least one ink containing at least one ceramic pigment by means of an inkjet printing station.
e. Introducing the ceramic tile in a firing kiln and firing at a maximum temperature comprised between 950 °C and 1250 °C, resulting in a decorated and fired ceramic tile.

The selection of the final weight of the digital ceramic glaze will depend on the final aesthetic effect to be provided to the ceramic tile. Certain compositions of digital ceramic glazes require greater weight than others to achieve, after firing, the desired aesthetic effects.

An additional feature of the method according to the present invention is that it preferably allows to achieve red and/or lemon yellow colour effects combined with aesthetic effects provided by any ceramic glaze once the ceramic tile has been fired. Examples of aesthetic effects generated by ceramic glazes, by way of example but not limitation, are transparent gloss, opaque gloss, transparent matte, opaque matte, satin matte or a mixture thereof.

As previously mentioned, once the ceramic tile is glazed and decorated, it is necessary to fire it so that the ceramic glaze develops the final aesthetic effect and the ceramic pigment is fully integrated into the ceramic glaze. In this sense, the present invention contemplates the firing kiln being a natural gas firing kiln commonly used in the ceramic tile sector. It should also be noted that in accordance with the present invention, the selection of the maximum temperature, comprised between 950 °C and 1250 °C, will depend on the type of inks and glazes that are deposited on the ceramic tile. Finally, it should be noted that the method for producing a glazed and decorated ceramic tile which protects the colour effects derived from ceramic pigments according to the present invention does not limit the inclusion or incorporation of other processes or steps that provide other aesthetic properties, and/or chromatic properties and/or additional functionalities to those that are protected in this invention, both before and after firing.

Considering everything described above, the second object of the present invention is a glazed and decorated ceramic tile according to the method of the present invention, characterised by developing colour effects without alteration of the ceramic pigment once fired.

### DESCRIPTION OF THE FIGURES

In the figures, elements that are the same or have the same function are accompanied by the same reference symbols.

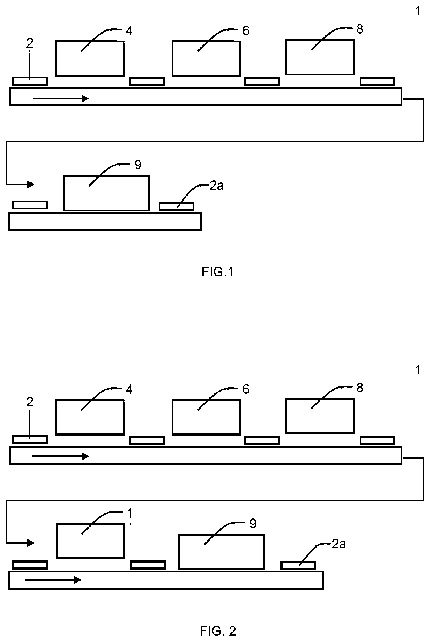

Figure 1 schematically depicts the method for producing a decorated and glazed ceramic tile according to the present invention (1). In that sense, the method follows the direction indicated by the arrow, in other words, from left to right, beginning with the supply of ceramic tile (2). Said ceramic tile (2) then goes to the glazing station (4) where the ceramic glaze (3) is deposited with a weight comprised between 30 g/m² and 1000 g/m². Next, the ceramic tile (2) goes to the glazing station (6) where the ceramic glaze (5) is deposited, characterised by not containing alkaline-earth elements or Zn and being deposited with a weight comprised between 30 g/m² and 1000 g/m². Subsequently, the ceramic tile (2) goes to the inkjet printing station (8) where at least one ink (7) is printed. The method ends with the ceramic tile (2) entering a firing kiln (9) where it is subjected to firing at a maximum temperature comprised between 950 °C and 1250 °C. Once the firing has ended, a fired glazed and decorated ceramic tile (2a) is obtained which protects the colour effects derived from ceramic pigments, preferably red and/or lemon yellow, resulting from the method according to the present invention.
Figure 2 schematically depicts the method for producing a glazed and decorated ceramic tile according to the present invention (1) in which a glazing station is additionally included after printing the at least one ink, preferably red or lemon yellow, and before introducing it in a firing kiln. In that sense, the method follows the direction indicated by the arrow, in other words, from left to right, beginning with the supply of ceramic tile (2). Said ceramic tile (2) then goes to the glazing station (4) where the ceramic glaze (3) is deposited with a weight comprised between 30 g/m² and 1000 g/m². Next, the ceramic tile (2) goes to the glazing station (6) where the ceramic glaze (5) is deposited, characterised by not containing alkaline-earth elements or Zn and being deposited with a weight comprised between 30 g/m² and 1000 g/m². Subsequently, the ceramic tile (2) goes to the inkjet printing station (8) where at least one ink (7) is printed. Next, the ceramic tile (2) goes to the glazing station (11) where the ceramic glaze (10) is deposited, characterised by not containing alkaline-earth elements or Zn and being deposited with a weight comprised between 30 g/m² and 1000 g/m². The method ends with the ceramic tile (2) entering a firing kiln (9) where it is subjected to firing at a maximum temperature comprised between 950 °C and 1250 °C. Once the firing has ended, a fired glazed and decorated ceramic tile (2a) is obtained which protects the colour effects derived from ceramic pigments, preferably red and/or lemon yellow, resulting from the method according to the present invention.

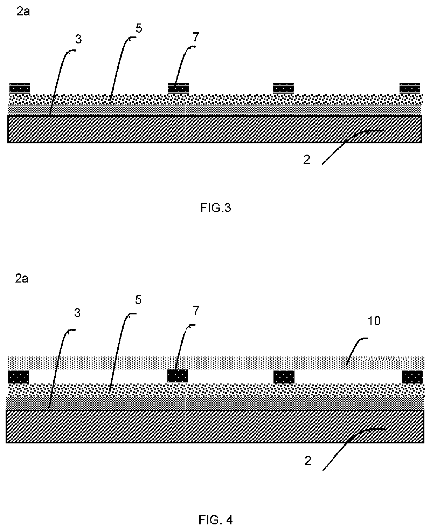

Figure 3 schematically depicts a side view of the glazed and decorated ceramic tile according to the present invention once fired (2a), which shows a layer of ceramic glaze (3) on which a layer of ceramic glaze (5) has been deposited, characterised by not containing alkaline-earth elements or Zn, followed by decoration with at least one colour ink (7), preferably red or lemon yellow.
Figure 4 schematically depicts a side view of the glazed and decorated ceramic tile according to the present invention once fired (2a), which shows a layer of ceramic glaze (3) on which a layer of ceramic glaze (5) has been deposited, characterised by not containing alkaline-earth elements or Zn, followed by decoration with at least one colour ink (7), preferably red or lemon yellow, and finally, a layer of ceramic glaze (10), characterised by not containing alkaline-earth elements or Z.

### PREFERRED EMBODIMENTS

The present invention is explained in more detail by means of preferred embodiments with reference to the figures. The following examples are provided for illustrative purposes and are not intended to limit the present invention.

**Example 1.** Obtaining a porous single-fired ceramic tile with a transparent gloss effect decorated with red ink and lemon yellow ink.

A ceramic tile CT1 was prepared following the method according to the present invention and comprising the following steps:
a. Supplying a ceramic tile (2).
b. Glazing the ceramic tile (2) with a first ceramic glaze (3) that develops a transparent gloss effect by means of a digital glazing station (4), applying a weight of 100 g/m².
c. Depositing on the first ceramic glaze (3) a second ceramic glaze (5) that develops a transparent gloss effect, characterised by not containing alkaline-earth elements or Zn, by means of a digital glazing station (6), applying a weight of 30 g/m².
d. Printing two colour inks that allow the red and lemon yellow colors to be developed by means of an inkjet printing station (8). In all colours the application weight of each ink was 20 g/m².
e. Introducing the ceramic tile in a firing kiln (9) and firing in a porous single-firing type firing cycle commonly used in the ceramic tile sector, with a maximum temperature of 1,120 °C.

In turn, a ceramic tile CT2 was prepared following the traditional glazing method according to the state of the art and comprising the following steps:
a. Supplying a ceramic tile (2).
b. Glazing the ceramic tile (2) with a first ceramic glaze (3) that develops a transparent gloss effect by means of a digital glazing station (4), applying a weight of 100 g/m².
c. Printing two colour inks that allow the red and lemon yellow colors to be developed by means of an inkjet printing station (8). In all colours the application weight of each ink was 20 g/m².
d. Introducing the ceramic tile in a firing kiln (9) and firing in a porous single-firing type firing cycle commonly used in the ceramic tile sector, with a maximum temperature of 1,120 °C.

Once fired, ceramic tiles CT1 and CT2 were evaluated from the point of view of chromatic performance of both colours. The following table shows the measurement of the chromatic parameters L, a* and b* in both ceramic tiles for each of the colours. As can be observed, obtaining ceramic tile CT1 according to the present invention allows the red and lemon yellow colour to be obtained, while the desired colour performance is not obtained in ceramic tile CT2.

**Table 1**

| | CT1 | | | CT2 | | |
|---|---|---|---|---|---|---|
| | L | a* | b* | L | a* | b* |
| Red | 78.17 | 39.88 | 30.93 | 79.72 | -0.93 | 8.88 |
| Lemon yellow | 85.45 | -4.58 | 55.66 | 86.47 | -5.81 | 37.14 |

**Example 2.** Obtaining a porous single-fired ceramic tile with a matte effect decorated with red ink and lemon yellow ink.

A ceramic tile CT3 was prepared following the method according to the present invention and comprising the following steps:
a. Supplying a ceramic tile (2).
b. Glazing the ceramic tile (2) with a first ceramic glaze (3) that develops a matte effect by means of a spray glazing station (4), applying a weight of 500 g/m².
c. Depositing on the first ceramic glaze (3) a second ceramic glaze (5) that develops a transparent matte effect, characterised by not containing alkaline-earth elements or Zn, by means of a digital glazing station (6), applying a weight of 30 g/m².
d. Printing two colour inks that allow the red and lemon yellow colors to be developed by means of an inkjet printing station (8). In all colours the application weight of each ink was 20 g/m².
e. Introducing the ceramic tile in a firing kiln (9) and firing in a porous single-firing type firing cycle commonly used in the ceramic tile sector, with a maximum temperature of 1140 °C.

In turn, a ceramic tile CT4 was prepared following the traditional glazing method according to the state of the art and comprising the following steps:
a. Supplying a ceramic tile (2).
b. Glazing the ceramic tile (2) with a first ceramic glaze (3) that develops a matte effect by means of a spray glazing station (4), applying a weight of 500 g/m².
c. Printing two colour inks that allow the red and lemon yellow colors to be developed by means of an inkjet printing station (8). In all colours the application weight of each ink was 20 g/m².
d. Introducing the ceramic tile in a firing kiln (9) and firing in a porous single-firing type firing cycle commonly used in the ceramic tile sector, with a maximum temperature of 1140 °C.

Once fired, ceramic tiles CT3 and CT4 were evaluated from the point of view of chromatic performance of both colours. The following table shows the measurement of the chromatic parameters L, a* and b* in both ceramic tiles for each of the colours. As can be observed, obtaining ceramic tile CT3 according to the present invention allows the red and lemon yellow colour to be obtained, while the desired colour performance is not obtained in ceramic tile CT4.

**Table 2**

| | CT3 | | | CT4 | | |
|---|---|---|---|---|---|---|
| | L | a* | b* | L | a* | b* |
| Red | 70.79 | 15.84 | 18.43 | 90.55 | -0.75 | 7.52 |
| Lemon yellow | 86.14 | -6.3 | 51.63 | 86.81 | -4.13 | 29.55 |

**Example 3.** Obtaining a porcelain ceramic tile with an opaque gloss effect decorated with red ink and lemon yellow ink.

A ceramic tile CT5 was prepared following the method according to the present invention and comprising the following steps:
a. Supplying a ceramic tile (2).
b. Glazing the ceramic tile (2) with a first ceramic glaze (3) that develops an opaque gloss effect by means of a digital glazing station (4), applying a weight of 60 g/m².
c. Depositing on the first ceramic glaze (3) a second ceramic glaze (5) that develops a transparent gloss effect, characterised by not containing alkaline-earth elements or Zn, by means of a digital glazing station (6), applying a weight of 60 g/m².
d. Printing two colour inks that allow the red and lemon yellow colors to be developed by means of an inkjet printing station (8). In all colours the application weight of each ink was 20 g/m².
e. Introducing the ceramic tile in a firing kiln (9) and firing in a porcelain type firing cycle commonly used in the ceramic tile sector, with a maximum temperature of 1250 °C.

In turn, a ceramic tile CT6 was prepared following the traditional glazing method according to the state of the art and comprising the following steps:
a. Supplying a ceramic tile (2).
b. Glazing the ceramic tile (2) with a first ceramic glaze (3) that develops an opaque gloss effect by means of a digital glazing station (4), applying a weight of 60 g/m².
c. Printing two colour inks that allow the red and lemon yellow colors to be developed by means of an inkjet printing station (8). In all colours the application weight of each ink was 20 g/m².
d. Introducing the ceramic tile in a firing kiln (9) and firing in a porcelain type firing cycle commonly used in the ceramic tile sector, with a maximum temperature of 1250 °C.

Once fired, ceramic tiles CT5 and CT6 were evaluated from the point of view of chromatic performance of both colours. The following table shows the measurement of the chromatic parameters L, a* and b* in both ceramic tiles for each of the colours. As can be observed, obtaining ceramic tile CT5 according to the present invention allows the red and lemon yellow colour to be obtained, while the desired colour performance is not obtained in ceramic tile CT6.

**Table 3**

| | CT5 | | | CT6 | | |
|---|---|---|---|---|---|---|
| | L | a* | b* | L | a* | b* |
| Red | 81.76 | 20.55 | 18.06 | 88.21 | -1.06 | 7.71 |
| Lemon yellow | 83.33 | -5.2 | 58.52 | 85.16 | -3.44 | 24.52 |

**Example 4.** Obtaining a porcelain ceramic tile with a matte effect decorated with red ink and lemon yellow ink.

A ceramic tile CT7 was prepared following the method according to the present invention and comprising the following steps:
a. Supplying a ceramic tile (2).
b. Glazing the ceramic tile (2) with a first ceramic glaze (3) that develops a matte effect by means of a bell glazing station (4), applying a weight of 1000 g/m².
c. Depositing on the first ceramic glaze (3) a second ceramic glaze (5) that develops a matte effect, characterised by not containing alkaline-earth elements or Zn, by means of a digital glazing station (8), applying a weight of 40 g/m².
d. Printing two colour inks that allow the red and lemon yellow colors to be developed by means of an inkjet printing station (8). In all colours the application weight of each ink was 20 g/m².
e. Introducing the ceramic tile in a firing kiln (9) and firing in a porcelain type firing cycle commonly used in the ceramic tile sector, with a maximum temperature of 1200 °C.

In turn, a ceramic tile CT8 was prepared following the traditional glazing method according to the state of the art and comprising the following steps:
a. Supplying a ceramic tile (2).
b. Glazing the ceramic tile (2) with a first ceramic glaze (3) that develops a matte effect by means of a bell glazing station (4), applying a weight of 1000 g/m².
c. Printing two colour inks that allow the red and lemon yellow colors to be developed by means of an inkjet printing station (8). In all colours the application weight of each ink was 20 g/m².
d. Introducing the ceramic tile in a firing kiln (9) and firing in a porcelain type firing cycle commonly used in the ceramic tile sector, with a maximum temperature of 1200 °C.

Once fired, ceramic tiles CT7 and CT8 were evaluated from the point of view of chromatic performance of both colours. The following table shows the measurement of the chromatic parameters L, a* and b* in both ceramic tiles for each of the colours. As can be observed, obtaining ceramic tile CT7 according to the present invention allows the red and lemon yellow colour to be obtained, while the desired colour performance is not obtained in ceramic tile CT8.

**Table 4**

| | CT7 | | | CT8 | | |
|---|---|---|---|---|---|---|
| | L | a* | b* | L | a* | b* |
| Red | 44.84 | 26.45 | 20.96 | 86.35 | -0.64 | 7.82 |
| Lemon yellow | 82.92 | -5.43 | 57.06 | 85.53 | -6.36 | 36.83 |

**Example 5.** Obtaining a porcelain ceramic tile with a transparent gloss effect and a third protective glaze, decorated with red ink and lemon yellow ink.

A ceramic tile CT9 was prepared following the method according to the present invention and comprising the following steps:
a. Supplying a ceramic tile (2).
b. Glazing the ceramic tile (2) with a first ceramic glaze (3) that develops a transparent gloss effect by means of a digital glazing station (4), applying a weight of 200 g/m².
c. Depositing on the first ceramic glaze (3) a second ceramic glaze (5) that develops a transparent gloss effect, characterised by not containing alkaline-earth elements or Zn, by means of a digital glazing station (6), applying a weight of 60 g/m².
d. Printing two colour inks that allow the red and lemon yellow colors to be developed by means of an inkjet printing station (8). In all colours the application weight of each ink was 20 g/m².
e. Depositing a third enamel (10) that develops a transparent gloss effect, characterised by not containing alkaline-earth elements or Zn, by means of a digital glazing station (11), applying a weight of 30 g/m².
f. Introducing the ceramic tile in a firing kiln (9) and firing in a porcelain type firing cycle commonly used in the ceramic tile sector, with a maximum temperature of 1200 °C.

In turn, a ceramic tile CT10 was prepared following the traditional glazing method according to the state of the art and comprising the following steps:
a. Supplying a ceramic tile (2).
b. Glazing the ceramic tile (2) with a first ceramic glaze (3) that develops a transparent gloss effect by means of a digital glazing station (4), applying a weight of 200 g/m².
c. Printing two colour inks that allow the red and lemon yellow colors to be developed by means of an inkjet printing station (8). In all colours the application weight of each ink was 20 g/m².
d. Introducing the ceramic tile in a firing kiln (9) and firing in a porcelain type firing cycle commonly used in the ceramic tile sector, with a maximum temperature of 1200 °C.

Once fired, ceramic tiles CT9 and CT10 were evaluated from the point of view of chromatic performance of both colours. The following table shows the measurement of the chromatic parameters L, a* and b* in both ceramic tiles for each of the colours. As can be observed, obtaining ceramic tile CT9 according to the present invention allows the red and lemon yellow colour to be obtained, while the desired colour performance is not obtained in ceramic tile CT10.

**Table 5**

| | CT9 | | | CT10 | | |
|---|---|---|---|---|---|---|
| | L | a* | b* | L | a* | b* |
| Red | 64.67 | 22.05 | 15.94 | 71.18 | -1.34 | 14.10 |
| Lemon yellow | 74.95 | -3.40 | 54.25 | 82.16 | -3.44 | 24.52 |

## Claims

1. A method for producing a glazed and decorated ceramic tile which protects the colour effects derived from ceramic pigments, (1) comprising:
a. Supplying a ceramic tile (2).
b. Glazing the ceramic tile (2) with a first ceramic glaze (3) by means of a glazing station (4).
c. Depositing on the first ceramic glaze (3) a second ceramic glaze (5) by means of a glazing station (6), where the second ceramic glaze (5) does not contain alkaline-earth elements or Zn.
d. Printing a decoration with at least one colour ink (7) by means of an inkjet printing station (8).
e. Introducing the ceramic tile in a firing kiln (9) and firing at a maximum temperature comprised between 950 °C and 1250 °C, resulting in a decorated and fired ceramic tile.

2. The method according to claim 1 wherein, after the step of printing the at least one colour ink (7) by means of the inkjet printing station (8) and before introducing it in a firing kiln (9), glazing is performed with a third ceramic glaze (10) by means of a glazing station (11), where the third ceramic glaze (10) does not contain alkaline-earth elements or Zn.

3. The method according to any of the preceding claims, wherein the colour ink comprises at least one red iron oxides ceramic pigment.

4. The method according to any of the preceding claims, wherein the colour ink comprises at least one ceramic pigment comprising titanium, chromium, nickel, antimony or a mixture thereof.

5. The method according to any of the previous claims, wherein ceramic glaze (3), ceramic glaze (5) and ceramic glaze (10) are deposited on the ceramic tile with a weight comprised between 30 g/m² and 1000 g/m² by means of inkjet, airbrushing, roller, veil glazing, serigraphy, bell or combinations thereof.

6. The method according to any of the preceding claims, wherein the ceramic glazes (3, 5 and 10) are digital ceramic glazes with a particle diameter (D90) not greater than 1 micrometer and are deposited on the ceramic tile with a weight comprised between 30 g/m² and 1000 g/m² by means of inkjet equipment.

7. The method according to any of the preceding claims, wherein the digital ceramic glazes (3, 5 and 10) are applied with the same digital glazing station.

8. A glazed and decorated ceramic tile with colour effects according to the method described in any one of the preceding claims.

9. The glazed and decorated ceramic tile with colour effects according to the preceding claim, wherein the colour effects are red and/or lemon yellow.

## Patentansprüche

1. Verfahren zur Herstellung einer glasierten und dekorierten Keramikfliese, das die von Keramikpigmenten abgeleiteten Farbeffekte schützt, (1) umfassend:
a. Bereitstellen einer Keramikfliese (2).
b. Glasieren der Keramikfliese (2) mit einer ersten Keramikglasur (3) mittels einer Glasierstation (4).
c. Aufbringen einer zweiten Keramikglasur (5) auf die erste Keramikglasur (3) mittels einer Glasierstation (6), wobei die zweite Keramikglasur (5) keine erdalkalischen Elemente oder Zn enthält.
d. Bedrucken eines Dekors mit mindestens einer Farbtinte (7) mittels einer Tintenstrahldruckstation (8).
e. Einführen der Keramikfliese in einen Brennofen (9) und Brennen bei einer Maximaltemperatur, die zwischen 950 °C und 1250 °C umfasst, was zu einer dekorierten und gebrannten Keramikfliese führt.

2. Verfahren nach Anspruch 1, wobei nach dem Schritt des Aufdruckens der mindestens einen Farbtinte (7) mittels der Tintenstrahldruckstation (8) und vor dem Einführen in einen Brennofen (9) das Glasieren mit einer dritten Keramikglasur (10) mittels einer Glasurstation (11) durchgeführt wird, wobei die dritte Keramikglasur (10) keine erdalkalischen Elemente oder Zn enthält.

3. Verfahren nach einem der vorhergehenden Ansprüche, wobei die Farbtinte mindestens ein rotes Eisenoxid-Keramikpigment umfasst.

4. Verfahren nach einem der vorhergehenden Ansprüche, wobei die Farbtinte mindestens ein Keramikpigment umfasst, das Titan, Chrom, Nickel, Antimon oder ein Gemisch davon umfasst.

5. Verfahren nach einem der vorhergehenden Ansprüche, wobei die Keramikglasur (3), die Keramikglasur (5) und die Keramikglasur (10) auf die Keramikfliese mit einem Gewicht, das zwischen 30 g/m² und 1000 g/m² umfasst, mittels Tintenstrahl, Farbspritzen, Walze, Schleierglasur, Siebdruck, Glocke oder Kombinationen davon aufgebracht werden.

6. Verfahren nach einem der vorhergehenden Ansprüche, wobei die Keramikglasuren (3, 5 und 10) digitale Keramikglasuren mit einem Partikeldurchmesser (D90) von nicht mehr als 1 Mikrometer sind und auf die Keramikfliese mit einem Gewicht, das zwischen 30 g/m² und 1000 g/m² umfasst, mittels einer Tintenstrahleinrichtung aufgetragen werden.

7. Verfahren nach einem der vorhergehenden Ansprüche, wobei die digitalen Keramikglasuren (3, 5 und 10) mit der gleichen digitalen Glasurstation aufgetragen werden.

8. Glasierte und dekorierte Keramikfliese mit Farbeffekten nach dem in einem der vorhergehenden Ansprüche beschriebenen Verfahren.

9. Glasierte und dekorierte Keramikfliese mit Farbeffekten nach dem vorhergehenden Anspruch, wobei die Farbeffekte rot und/oder zitronengelb sind.

## Revendications

1. Procédé pour produire un carreau en céramique émaillé et décoré qui protège les effets de couleur dérivés des pigments céramiques, (1) comprenant :
a. la fourniture d'un carreau en céramique (2).
b. l'émaillage du carreau en céramique (2) avec un premier émail céramique (3) au moyen d'une station d'émaillage (4).
c. le dépôt sur le premier émail céramique (3) d'un deuxième émail céramique (5) au moyen d'une station d'émaillage (6), le deuxième émail céramique (5) ne contenant pas d'éléments alcalino-terreux ni de Zn.
d. l'impression d'une décoration avec au moins une encre de couleur (7) au moyen d'une station d'impression à jet d'encre (8).
e. l'introduction du carreau en céramique dans un four de cuisson (9) et cuisson à une température maximale comprise entre 950 °C et 1250 °C, le résultat étant un carreau en céramique décoré et cuit.

2. Procédé selon la revendication 1 dans lequel, après l'étape d'impression de l'au moins une encre de couleur (7) au moyen de la station d'impression à jet d'encre (8) et avant son introduction dans un four de cuisson (9), l'émaillage est effectué avec un troisième émail céramique (10) au moyen d'une station d'émaillage (11), le troisième émail céramique (10) ne contenant pas d'éléments alcalino-terreux ni de Zn.

3. Procédé selon l'une quelconque des revendications précédentes, dans lequel l'encre de couleur comprend au moins un pigment céramique d'oxyde de fer rouge.

4. Procédé selon l'une quelconque des revendications précédentes, dans lequel l'encre de couleur comprend au moins un pigment céramique comprenant du titane, du chrome, du nickel, de l'antimoine ou un mélange de ceux-ci.

5. Procédé selon l'une quelconque des revendications précédentes, dans lequel l'émail céramique (3), l'émail céramique (5) et l'émail céramique (10) sont déposés sur le carreau en céramique avec un poids compris entre 30 g/m² et 1000 g/m² au moyen d'un jet d'encre, d'un travail à l'aérographe, d'un rouleau, d'un émaillage à voile, d'une sérigraphie, d'une cloche ou des combinaisons de ceux-ci.

6. Procédé selon l'une quelconque des revendications précédentes, dans lequel les émaux céramiques (3, 5 et 10) sont des émaux céramiques numériques dont le diamètre des particules (D90) n'est pas supérieur à 1 micromètre et qui sont déposés sur le carreau en céramique avec un poids compris entre 30 g/m² et 1000 g/m² au moyen d'un équipement à jet d'encre.

7. Procédé selon l'une quelconque des revendications précédentes, dans lequel les émaux céramiques numériques (3, 5 et 10) sont appliqués avec la même station d'émaillage numérique.

8. Carreau en céramique émaillé et décoré avec des effets de couleur selon le procédé décrit dans l'une quelconque des revendications précédentes.

9. Carreau en céramique émaillé et décoré avec des effets de couleur selon la revendication précédente, dans lequel les effets de couleur sont le rouge et/ou le jaune citron.
